(19) Europäisches Patentamt

European Patent Office

Office européen des brevets

(11) **EP 1 733 875 A1**

(12) **EUROPÄISCHE PATENTANMELDUNG**

(43) Veröffentlichungstag:
   **20.12.2006 Patentblatt 2006/51**

(51) Int Cl.:
   **B32B 27/34** (2006.01)

(21) Anmeldenummer: 06011737.1

(22) Anmeldetag: **07.06.2006**

(84) Benannte Vertragsstaaten:
   **AT BE BG CH CY CZ DE DK EE ES FI FR GB GR HU IE IS IT LI LT LU LV MC NL PL PT RO SE SI SK TR**
   Benannte Erstreckungsstaaten:
   **AL BA HR MK YU**

(30) Priorität: **15.06.2005 DE 102005027657**

(71) Anmelder: **Mitsubishi Polyester Film GmbH**
   **65023 Wiesbaden (DE)**

(72) Erfinder:
   • **Klein, Dagmar, Dr.**
     **65437 Ockenheim (DE)**
   • **Pfeiffer, Herbert, Prof. Dr.**
     **55126 Mainz (DE)**
   • **Hilkert, Gottfried, Dr.**
     **55291 Saulheim (DE)**

(74) Vertreter: **Schweitzer, Klaus et al**
   **Zounek Plate Schweitzer**
   **Patentanwaltskanzlei**
   **Rheingaustrasse 196**
   **65203 Wiesbaden (DE)**

(54) **Mehrschichtige, transparente Polyesterfolie mit hoher Sauerstoffbarriere**

(57)   Die Erfindung betrifft eine 3-schichtige Polyesterfolie mit A-B-C-Aufbau, welche eine Basisschicht B, bestehend bevorzugt aus PET, und die darauf aufgebrachten Deckschichten A und C umfasst, wobei diese Deckschichten Polyester mit Ethylenterephthalat- und/ oder Ethylenisophthalat-Einheiten und als zusätzliches Polymer Poly(m-xylol-adipinamid) (10 bis 45 Gew.-%) enthalten und wobei mindestens eine der Deckschichten ein Antiblockmittel mit einem mittleren Partikeldurchmesser von 2 bis 5 μm enthält. Diese Folie hat eine hohe Sauerstoffbarriere.

Figur 1

EP 1 733 875 A1

**Beschreibung**

Die Erfindung betrifft eine mehrschichtige, transparente, biaxial orientierte Polyesterfolie mit einer Basisschicht B und beidseitig auf dieser Basisschicht B aufgebrachten Deckschichten A und C. Die Deckschichten enthalten neben Polyester als zusätzliches Polymer Poly(m-xylol-adipinamid) (MXD6). Die Erfindung betrifft weiterhin ein Verfahren zur Herstellung der Folie und ihre Verwendung.

Transparente, biaxial orientierte Polyesterfolien, die sich durch verbesserte Barriereeigenschaften auszeichnen und MXD6 in zumindest einer Deckschicht enthalten, sind nach dem Stand der Technik bekannt.

In der EP-A-1 440 793 wird eine biaxial orientierte Polyesterfolie beschrieben, die eine polyesterhaltige Basisschicht B und mindestens eine Deckschicht A aufweist, die MXD6 enthält. Die Folie zeichnet sich durch verbesserte optische Eigenschaften wie erhöhten Glanz und durch gute Barriereeigenschaften, insbesondere gegenüber Sauerstoffdurchtritt, aus und ist daher als Verpackungsmaterial für Nahrungs- und Genussmittel geeignet. Die Folie ist nicht einfach herstellbar, insbesondere, wenn der MXD6-Gehalt in der Deckschicht vergleichsweise hoch ist. Außerdem neigt die Folie dann u. U. zum Delaminieren zwischen den einzelnen Schichten.

In der EP-A-1 457 316 wird eine mehrschichtige, transparente, biaxial orientierte Polyesterfolie mit einer Basisschicht B und mindestens einer auf dieser Basisschicht B aufgebrachten Deckschicht A beschrieben, die dadurch gekennzeichnet ist, dass die Basisschicht B und die Deckschicht A MXD6 enthalten. Diese Polyesterfolie weist gegenüber Folien nach dem Stand der Technik verbesserte optische Eigenschaften, insbesondere einen erhöhten Glanz, auf. Darüber hinaus zeichnet sich die Folie durch gute Barriereeigenschaften, insbesondere gegenüber dem Durchtritt von Sauerstoff, aus.

Aufgabe der vorliegenden Erfindung war es, eine transparente, biaxial orientierte Polyesterfolie zur Verfügung zu stellen, die die Nachteile der Folien aus dem Stand der Technik nicht aufweist und sich insbesondere durch

- weiterhin verbesserte Barriereeigenschaften, insbesondere gegenüber Sauerstoff,
- eine verbesserte Haftkraft zwischen den jeweiligen Schichten,
- eine verbesserte Wickelung und verbessertes Verarbeitungsverhalten und
- eine wirtschaftliche Herstellung

auszeichnet. Es sollte z. B. gewährleistet sein, dass das Regenerat in einer Menge von bis zu ca. 60 Gew.-% wieder der Extrusion zugeführt werden kann, ohne dass dabei die optischen Eigenschaften der Folie, insbesondere aber die Barriere gegenüber Sauerstoff, negativ beeinflusst werden.

Gelöst wird diese Aufgabe durch eine dreischichtige, transparente, biaxial orientierte Polyesterfolie mit einer Basisschicht B, die zu mindestens 80 Gew.-% aus einem thermoplastischen Polyester besteht, und darauf aufgebrachten Deckschichten A und C, welche

- Ethylenterephthalat- und/oder Ethylenisophthalat-Einheiten in einer Menge von 54 bis 90 Gew.-% und
- Poly(m-xylol-adipinamid) (MXD6) in einer Menge von 10 bis 45 Gew.-% aufweisen, und wobei zumindest eine der Deckschichten A und C zumindest ein Antiblockmittel enthält, das durch die folgenden Merkmale gekennzeichnet ist:

- Der mittlere Partikeldurchmesser ($d_{50}$-Wert) liegt im Bereich von 2 bis 5 $\mu$m,
- die Streuung der Partikelgrößenverteilung, ausgedrückt durch den SPAN 98, liegt im Bereich von 1,2 bis 2,0, und
- die Konzentration liegt im Bereich von 0,1 bis 1 Gew.-%.

Bei den oben angegebenen Parametern (Gew.-%, Durchmesser etc.) handelt es sich um bevorzugte Werte. Die vorliegende Erfindung umfasst auch Ausführungsformen außerhalb dieser Wertebereiche. Gew.-% bezieht sich auf das Gesamtgewicht der entsprechend ausgerüsteten Schicht oder Schichten. Unter dem Begriff Polyester werden auch Gemische verschiedener Polyester verstanden.

Die erfindungsgemäße Folie weist eine Sauerstoffpermeation von bevorzugt weniger als 60 cm$^3$/(m$^2$ ·bar ·d) und eine Mindesthaftung zwischen den Schichten A und B von bevorzugt größer/gleich 1,0 N/15 mm auf.

Die erfindungsgemäße Folie ist bevorzugt dreischichtig aufgebaut. Sie besteht dann aus der Deckschicht A, der Basisschicht B und der Deckschicht C (Schichtfolge A-B-C).

Basisschicht B

Die Basisschicht der Folie besteht bevorzugt zu mindestens 80 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel $HO-(CH_2)_n-OH$, wobei n eine ganze Zahl von 3 bis 6 darstellt, verzweigte aliphatische Glykole mit bis zu 6 Kohlenstoff-Atomen, aromatische Diole der allgemeinen Formel $HO-C_6H_4-X-C_6H_4-OH$, wobei X für $-CH_2-$, $-C(CH_3)_2-$, $-C(CF_3)_2-$, -O-, -S- oder $-SO_2-$ steht, oder Bisphenole der allgemeinen Formel $HO-C_6H_4-C_6H_4-OH$ eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder $(C_1-C_{16})$Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

## Deckschichten A und C

Die Deckschichten A und C enthalten Ethylenterephthalat- und/oder Ethylenisophthalat-Einheiten in einer Menge von bevorzugt 54 bis 90 Gew.-%. Insbesondere enthalten sie diese Rohstoffe in einer Menge von 56 bis 89 Gew.-% und besonders bevorzugt in einer Menge von 59 bis 88 Gew.-%. Für beide Deckschichten A und C können prinzipiell die gleichen (Polyester-) Polymere verwendet werden, wie für die Basisschicht B, insbesondere aber Polyethylenterephthalat. Die Deckschichten A und C können gleich oder verschieden sein.

Besonders zweckmäßig ist, wenn in den Deckschichten A und C ein PolyesterCopolymer auf Basis von Isophthalsäure und Terephthalsäure verwendet wird. In diesem Fall sind die optischen Eigenschaften der Folie besonders gut.

In diesem Fall enthalten die Deckschichten A und C der Folie im Wesentlichen ein Polyestercopolymeres, das überwiegend aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind. Der Anteil an Ethylenterephthalat beträgt 60 bis 97 Mol-% und der entsprechende Anteil an Ethylenisophthalat 40 bis 3 Mol-%. Bevorzugt sind Copolyester, bei denen der Anteil an Ethylenterephthalat 70 bis 95 Mol-% und der entsprechende Anteil an Ethylenisophthalat 30 bis 5 Mol-% beträgt.

Erfindungsgemäß enthalten beide Deckschichten A und C als eine weitere Komponente Poly(m-xylol-adipinamid) (MXD6) in einer Menge von bevorzugt 10 bis 45 Gew.-%, insbesondere in einer Menge von 11 bis 43 Gew.-% und besonders bevorzugt in einer Menge von 12 bis 40 Gew.-%, bezogen auf das Gewicht der Deckschichten A und C.

Ist der Anteil an MXD6 in den beiden Deckschichten A und C kleiner als 10 Gew.-%, so ist die Barrierewirkung der Folie u. U. nicht mehr ausreichend, ist der Anteil an MXD6 in den beiden Deckschichten A und C größer als 45 Gew.-%, so kann die Haftkraft zwischen einzelnen Schichten ungenügend sein, die Folie delaminiert.

Poly(m-xylol-adipinamid) (MXD6), auch als Poly-m-Xylylen-adipinamid oder PA-MXD6 bezeichnet, ist ein Polykondensationsprodukt (Polyarylamid) aus m-Xylylendiamin und Adipinsäure und wird in verschiedenen Typen auf dem Markt angeboten, die grundsätzlich alle für den erfindungsgemäßen Zweck geeignet sind. Bevorzugt werden Typen mit einer Schmelzviskosität von kleiner als 8000 Poise (bei 260 °C).

Die Dicke beider Deckschichten A und C ist bevorzugt größer als 0,9 μm und liegt insbesondere im Bereich von 1,0 bis 10 μm und besonders bevorzugt im Bereich von 1,1 bis 5 μm.

Die Basisschicht B und die beiden Deckschichten A und C können zusätzlich übliche Additive, wie z. B. Stabilisatoren, enthalten. Zumindest eine der beiden Deckschichten A oder C ist zusätzlich mit einem Antiblockmittel ausgerüstet. Die Additive werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithium Florid, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehr verschiedenen Antiblockmitteln oder Mischungen von Antiblockmitteln gleicher Zusammensetzung, aber unterschiedlicher Partikelgröße gewählt werden. Die Partikel können den jeweiligen Schichten in den dafür vorgesehenen Konzentrationen, z.B. als glykolische Dispersion während der Polykondensation oder über Masterbatche bei der Extrusion zugegeben werden.

Zur Erzielung einer guten Wicklung und einer guten Verarbeitbarkeit der Folie hat es sich als zweckmäßig erwiesen, dass diese zumindest in einer der beiden Deckschichten A und C ein Pigmentsystem (Antiblockmittel) enthält, bei dem der mittlere Durchmesser ($d_{50}$-Wert) im Bereich von 2,0 bis 5,0 $\mu$m und der SPAN 98 im Bereich von 1,2 und 2,0 liegen.

In einer bevorzugten Ausführungsform enthält mindestens eine der beiden Deckschichten A und C ein Pigmentsystem, bei dem der mittlere Partikeldurchmesser im Bereich von 2,1 bis 4,9 $\mu$m und der SPAN98 im Bereich von 1,25 und 1,9 liegen. In einer besonders bevorzugten Ausführungsform enthält mindestens eine der beiden Deckschichten A und C ein Pigment-System, bei dem der mittlere Durchmesser im Bereich von 2,2 bis 4,8 $\mu$m und der SPAN98 im Bereich von 1,3 und 1,8 liegen.

Zumindest eine der beiden Deckschichten A und C wird zur Verbesserung des Wickelverhaltens und der Verarbeitbarkeit vergleichsweise hoch mit inerten Pigmenten gefüllt. Die Konzentration der inerten Partikel in einer der vorgenannten Deckschichten liegt bevorzugt zwischen 0,10 und 1,0 Gew.-%, insbesondere zwischen 0,13 und 0,9 Gew.-% und in der besonders bevorzugten Ausführungsform zwischen 0,16 und 0,8 Gew.-% und richtet sich im Wesentlichen nach den zu erzielenden optischen Eigenschaften der Folie.

Die Rauigkeit $R_a$ der das Antiblockmittel enthaltenden Deckschicht ist bevorzugt größer als 40 nm. In einer bevorzugten Ausführungsform beträgt die Rauigkeit $R_a$ mehr als 45 nm, und in einer besonders bevorzugten Ausführungsform beträgt die Rauigkeit $R_a$ mehr als 50 nm.

In einer weiteren bevorzugten Ausführungsform der Erfindung enthält auch die andere der beiden Deckschichten A und C Antiblockmittel. Prinzipiell können dabei die beiden Deckschichten unterschiedliche Antiblockmittel in unterschiedlichen Konzentrationen aufweisen. Falls die andere Deckschicht ebenfalls mit Pigmenten gefüllt ist, werden dort zweckmäßiger Weise die gleichen Pigmente verwendet, wie zuvor für die Deckschicht nach der vorliegenden Erfindung näher beschrieben ist.

In einer weiteren bevorzugten Ausführungsform der Erfindung enthalten beide Deckschichten A und C die gleichen Antiblockmittel in der gleichen Konzentration. Hierdurch erhält die Folie ein besonders gutes Wickelverhalten und lässt sich problemlos weiterverarbeiten.

In einer anderen, ebenfalls zweckmäßigen Ausführungsform der Erfindung, beträgt der Füllstoffanteil der anderen der Deckschichten A oder C weniger als 0,1 Gew.-%, bevorzugt weniger als 0,05 Gew.-% und besonders bevorzugt ist diese Deckschicht frei von externen Füllstoffen/Pigmenten. Die Rauigkeit $R_a$ dieser Folienoberfläche ist dann kleiner als 50 nm. In einer bevorzugten Ausführungsform beträgt die Rauigkeit $R_a$ dieser Folienoberfläche weniger als 45 nm und in einer besonders bevorzugten Ausführungsform beträgt die Rauigkeit $R_a$ dieser Folienoberfläche weniger als 40 nm.

Der Glanz dieser Folienoberfläche ist bevorzugt größer als 120. Insbesondere beträgt der Glanz dieser Seite mehr als 125 und in einer besonders bevorzugten Ausführungsform mehr als 135.

Diese Folienoberfläche eignet sich daher insbesondere für eine weitere funktionelle Beschichtung, für die Bedruckung oder für die Metallisierung. Der hohe Glanz der Folie überträgt sich auf den Druck oder die aufgebrachte Metallschicht und verleiht somit der Folie das (gewollte) werbewirksame Aussehen.

Die Gesamtdicke der erfindungsgemäßen Polyesterfolie beträgt bevorzugt 6 bis 300 $\mu$m, vorzugsweise 8 bis 200 $\mu$m, besonders bevorzugt 10 bis 100 $\mu$m, wobei die Basisschicht (B) einen Anteil von vorzugsweise 40 bis 99 % an der Gesamtdicke hat.

**Verfahren**

Gegenstand der Erfindung ist auch ein Verfahren zur Herstellung der Folie. Zur Herstellung der Basisschicht B wird zweckmäßigerweise das Polyestergranulat direkt dem Extruder für die Basisschicht B zugeführt. Das Polyestergranulat lässt sich bei etwa 270 bis 300 °C extrudieren.

Die Polymere für die Deckschichten A und C werden zweckmäßig über jeweils weitere Extruder (hier ist prinzipiell der Zweischneckenextruder dem Einschneckenextruder vorzuziehen) dem Koextrusions-System zugeführt. Da das MXD6 nicht mehr als 275 °C verträgt, werden beide Koextruder nicht heißer als 275 °C betrieben. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung wird im Allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 (Aufheiztemperaturen 80 bis 130 °C) bis 130 °C (Strecktemperaturen 80 bis 130 °C, abhängig vom Streckverhältnis) und die Querstreckung in einem Temperaturbereich von 90 (Beginn der Streckung) bis 140 °C (Ende der Streckung) durchgeführt. Das Längsstreckverhältnis liegt bevorzugt im Bereich von 2,0:1 bis 5,0:1, insbesondere von 2,3:1 bis 4,8:1. Das Querstreckverhältnis liegt allgemein im Bereich von 2,5:1 bis 5,0:1, bevorzugt von 2,7:1 bis 4,5:1.

Vor der Querstreckung kann man eine oder beide Oberflächen der Folie nach den bekannten Verfahren In-Line beschichten. Die In-Line-Beschichtung kann beispielsweise zu einer verbesserten Haftung einer Metallschicht oder einer eventuell aufgebrachten Druckfarbe, aber auch zur Verbesserung des antistatischen Verhaltens, des Verarbeitungsverhaltens, aber auch zur weiteren Verbesserung der Barriere führen (durch Auftragung von Barrierebeschichtungen, die z.B. EVOH, PVOH oder dergleichen enthalten). Vorzugsweise werden solche Schichten dann auf die glattere (= weniger raue) Oberfläche der Folie aufgetragen.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Bei der Herstellung der Folie ist gewährleistet, dass Verschnittmaterial, das bei der Folienherstellung im Betrieb immanent anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich hervorragend zum Metallisieren oder dem Vakuumbeschichten mit keramischen Substanzen. Sie zeichnet sich dann ganz besonders durch hervorragende Barriereeigenschaften, insbesondere gegenüber Sauerstoff, aus. Die Folie eignet sich insbesondere als Verpackungsmaterial für Lebens- und Genussmittel.

Die nachstehende Tabelle (Tabelle 1) fasst die wichtigsten Folieneigenschaften noch einmal zusammen.

Tabelle 1

| | bevorzugt | besonders bevorzugt | ganz besonders bevorzugt | Einheit | Messmethode |
|---|---|---|---|---|---|
| **Deckschichten A und C** | | | | | |
| Ethylen-terephthalat/ isophthalat-Einheiten | 54 bis 90 | 56 bis 89 | 59 bis 88 | Gew.-% | |
| Poly(m-xylol-adipinamid) (MXD6) | 10 bis 45 | 11 bis 43 | 12 bis 40 | Gew.-% | |
| Dicke der Deckschichten A und C | > 0,9 | 1,0 bis 10 | 1,1 bis 5 | μm | |
| **Antiblockmittel enthaltende Deckschicht(en)** | | | | | |
| Füllstoffkonzentration des Pigmentsystems | 0,10 bis 1,0 | 0,13 bis 0,9 | 0,16 bis 0,8 | Gew.-% | |
| Partikeldurchmesser $d_{50}$ des Pigmentsystems | 2,0 bis 5 | 2,1 bis 4,9 | 2,2 bis 4,8 | μm | |
| SPAN 98 des Pigmentsystems | 1,2 bis 2,0 | 1,25 bis 1,9 | 1,3 bis 1,8 | | |
| Rauigkeit $R_a$ der Antiblockmittel enthaltenden Deckschicht(en) | > 40 | > 45 | > 50 | nm | DIN 4768 |

(fortgesetzt)

| Folieneigenschaften | | | | | |
|---|---|---|---|---|---|
| Sauerstoffpermeation (OTR) | < 60 | < 58 | < 56 | $cm^3/m^2 \cdot bar \cdot d$ | |
| Haftung zwischen den Schichten | 1,0 bis 10 | 1,2 bis 10 | 1,5 bis 10 | N/15 mm | |

**Messmethoden**

Zur Charakterisierung der Rohstoffe und der Folien wurden die folgenden Methoden benutzt:

DIN =       Deutsches Institut für Normung
ASTM =   American Society for Testing and Materials

**(1) Sauerstoffdurchlässigkeit (OTR = Oxygen Transmission Rate)**

Die Messung der Sauerstoffbarriere erfolgte mit einem ®OXTRAN 100 von Mocon Modern Controls (US) entsprechend DIN 53 380, Teil 3 (23 °C, 50 % relative Luftfeuchtigkeit auf beiden Seiten der Folie). Die Messung der OTR erfolgte dabei jeweils an 12 μm dicker Folie.

**(2) Trübung**

Die Trübung der Folie wurde in Anlehnung an ASTM-D 1003-52 bestimmt.

**(3) SV-Wert (standard viscosity)**

Die Standardviskosität SV (DCE) wird, angelehnt an DIN 53726, in Dichloressigsäure gemessen. Die intrinsische Viskosität IV (DCE) berechnet sich aus der Standardviskosität SV (DCE) wie folgt:

$$IV = [\eta] = 6,907 \cdot 10^{-4} \cdot SV\ (DCE) + 0,063096\ [\ dl/g]$$

**(4) Glanz**

Der Glanz wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**(5) Rauigkeit**

Die Rauigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z.B. Glas) berührt.

**(6) Mittlerer Partikeldurchmessers $d_{50}$**

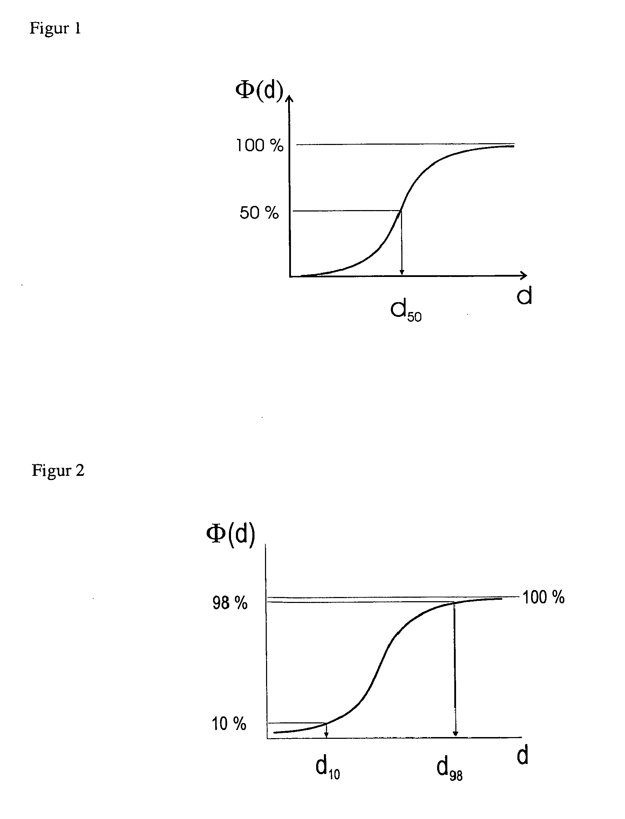

Die Bestimmung des mittleren Partikeldurchmessers $d_{50}$ wurde mittels Laser auf einem Malvern Master Sizer (Fa. Malvern Instruments GmbH, DE) nach der Standardmethode durchgeführt (andere Messgeräte sind z.B. Horiba LA 500 der Fa. Horiba, JP oder Sympathec Helos der Fa. Sympathec GmbH, DE, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert (vgl. Figur 1).

**(7) Messung des SPAN 98**

Die Bestimmung des SPAN 98 wurde mit dem gleichen Messgerät durchgeführt, wie bei der Bestimmung des mittleren Durchmessers $d_{50}$ beschrieben. Der SPAN 98 ist dabei wie folgt definiert:

$$SPAN\ 98\ =\ \frac{d_{98} - d_{10}}{d_{50}}$$

Für die Ermittlung von $d_{98}$ und $d_{10}$ wird wiederum die Summenkurve der Partikelgrößenverteilung zu Grunde gelegt. Der Schnittpunkt des 98 %-Ordinatenwertes mit der Summenkurve liefert auf der Abszissenachse den gewünschten $d_{98}$-Wert und der Schnittpunkt des 10 %-Ordinatenwertes mit der Summenkurve liefert auf der Abszissenachse den gewünschten $d_{10}$-Wert (vgl. Figur 2).

**(8) Haftung zwischen den Schichten**

Das Folienmuster (300 mm längs · 180 mm quer) wird vor dem Verkleben auf einen glatten Karton (200 mm längs · 180 mm quer; ca. 400 g/m$^2$, gebleicht, Außenlagen gestrichen) gelegt, die erstehenden Folienenden sind auf die Rückseite umzuschlagen und mit Klebeband zu fixieren.

Die Verklebung der Folie gemäß der vorliegenden Erfindung mit einer Standardpolyesterfolie von 12 μm Dicke erfolgt mit einem Rakelgerät und Rakelstab Nr. 3 der Fa. Erichsen, DE, wobei ca. 1,5 ml Klebstoff (®Novacote NC 275+CA 12; Mischverhältnis: 4/1 + 7 Teile Ethylacetat) auf die Deckschicht A der Folie gemäß der vorliegenden Erfindung aufgetragen wird. Nach dem Auslüften des Lösemittels wird die Standard-polyesterfolie mit einer Metallrolle (Breite 200 mm, Durchmesser 90 mm, Masse 10 kg, nach DIN EN 20 535) auf die Deckschicht A der Folie gemäß der vorliegenden Erfindung aufkaschiert. Die Parameter der Kaschierung sind:

| | |
|---|---|
| Klebstoffmenge | $5 \pm 1$ g/m$^2$ |
| Lüften nach Auftrag des Klebers | 4 min $\pm$ 15 s |
| Rakelstärke (Erichsen) | 3 |
| Geschwindigkeitsstufe des Rakels | ca. 133 mm/s |
| Aushärtzeit des Verbundes | 2 h bei 70 °C in einem Umluftofen |

Mit einem $20 \pm 1$ mm Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigen Klebebands mit der Rückseite der Folie vollflächig auf einem Trägerblech zu fixieren. Die Platte mit dem aufgeklebten Verbund ist auf einem Peel-Testers zu fixieren. Das nicht kaschierte Ende der Standard-Polyesterfolie ist so in die Kluppe des Peel-Testers (z.B. Instron, Fa. Zwick, DE) einzuspannen, dass sich ein Schälwinkel von 180° ergibt. Angegeben wird die mittlere Schälkraft in N/15 mm gerundet auf eine Stelle nach dem Komma.

| | |
|---|---|
| Probenbreite | 20 mm |
| Messlänge | 25 mm |
| Abzugsgeschwindigkeit bis Vorkraft | 25 mm/min |
| Vorweg | 5 mm |
| Prüfweg | 40 mm |
| Empfindlichkeit | 0,01 N |
| Abzugsgeschwindigkeit | 100 mm/min |

Das Messergebnis für die Schälkraft ist gleichzusetzen mit der minimalen Haftkraft zwischen den Schichten, da die Haftkraft zwischen dem Kleber und der Standardfolie deutlich größer ist.

**Beispiele**

Die folgenden Beispiele illustrieren die Erfindung. Die verwendeten Produkte (Marken und Herstellerfirma) sind jeweils nur einmal angegeben und beziehen sich dann auch auf die nachfolgenden Beispiele.

Chips aus Polyethylenterephthalat und MXD6 wurden in einem Mischungsverhältnis von 65/35 direkt den Extrudern (= Zweischneckenextruder mit Entgasung) für die beiden Deckschichten A und C zugeführt. Daneben wurden Chips aus Polyethylenterephthalat und Antiblockmittel dem Extruder für die Deckschicht C zugeführt. In den beiden Extrudern wurden die Materialien bei einer Temperatur von etwa 275 °C extrudiert. Die Schmelze wurde filtriert, in einer Mehrschichtdüse zu einem Flachfilm ausgeformt und als Deckschichten A und C der Basisschicht B überlagert.

Chips aus Polyethylenterephthalat wurden bei einer Temperatur von 160 °C auf eine Restfeuchte von weniger als 100 ppm getrocknet und dem Extruder für die Basisschicht B zugeführt.

Durch Koextrusion und anschließende stufenweise Orientierung in Längs- und Querrichtung wurde eine transparente dreischichtige Folie ABC mit einer Gesamtdicke von 12 $\mu$m hergestellt. Die Deckschichten A und C hatten jeweils eine Dicke von 1,3 $\mu$m.

**Beispiel 1 (B1)**

Deckschicht A

| | |
|---|---|
| 35 Gew.-% | Poly(m-xylol-adipinamid) (MXD6) der Fa. Mitsubishi Gas Chemical Co., Produktname ®Nylon MXD6 6007, |
| 65 Gew.-% | Polyethylenterephthalat (4023 von Invista/Offenbach) mit einem SV-Wert von 800 |

Basisschicht B

| | |
|---|---|
| 100 Gew.-% | Polyethylenterephthalat (4023 von Invista/Offenbach) mit einem SV-Wert von 800 und |

Deckschicht C

| | |
|---|---|
| 35 Gew.-% | Poly(m-xylol-adipinamid) (MXD6) der Fa. Mitsubishi Gas Chemical Co., Produktname Nylon MXD6 6007, |
| 45 Gew.-% | Polyethylenterephthalat mit einem SV-Wert von 800 |
| 20 Gew.-% | Masterbatch aus 97,75 Gew.-% Polyethylenterephthalat (SV-Wert von 800) und 1,0 Gew.-% Sylobloc 44 H (synthetisches $SiO_2$ der Fa. Grace; Partikeldurchmesser $d_{50}$: 2,5 $\mu$m, SPAN98: 1,8) und 1,25 Gew.-% Aerosil TT 600 (synthetisches, pyrogenes $SiO_2$ der Fa. Degussa; Primärkorndurchmesser: 40 nm). |

Die Herstellungsbedingungen in den einzelnen Verfahrensschritten waren:

| | | | |
|---|---|---|---|
| Extrusion | Temperaturen | A-Schicht: | 275 °C |
| | | B-Schicht: | 290 °C |
| | | C-Schicht: | 275 °C |
| | Temperatur der Abzugswalze | | 25 °C |
| Längsstreckung | Strecktemperatur: | | 115 °C |
| | Längsstreckverhältnis | | 4,0 |
| Querstreckung | Strecktemperatur | | 125 °C |
| | Querstreckverhältnis | | 3,9 |
| Fixierung | Temperatur | | 230 °C |
| | Dauer | | 3 s |

Die Folie hatte die geforderte Sauerstoffbarriere und die geforderte Haftung der Schichten untereinander.

**Beispiel 2 (B2)**

Wie in Beispiel 1 wurde durch Koextrusion eine dreischichtige Folie ABC mit einer Gesamtdicke von 12 $\mu$m hergestellt. Die Deckschichten A und C hatten eine Dicke von jeweils 1,8 $\mu$m.

**Vergleichsbeispiel (VB1)**

Es wurde eine Folie entsprechend Beispiel 1 der EP-A-1 440 793 hergestellt. Die Rauigkeitswerte dieser Folie sind zu hoch, und die Haftung zwischen den Schichten zu gering.
Die Eigenschaften und der Aufbau der gemäß den Beispielen und dem Vergleichsbeispiel hergestellten Folien sind in Tabelle 2 zusammengestellt.

Tabelle 2

| | Folien-dicke in µm | Folien-aufbau | Schichtdicken in µm | | | Sauerstoff-permeation cm$^3$/m$^2$ ·bar · d | Haftung zwischen den Schichten N/15 mm | Rauigkeit von | | Glanz | | Wickelver-halten | Verarbeitungs-verhalten |
|---|---|---|---|---|---|---|---|---|---|---|---|---|---|
| | | | A | B | C | | | Seite A nm | Seite C nm | Seite A | Seite C | | |
| B1 | 12 | ABC | 1,3 | 9,4 | 1,3 | 35 | 1,8 | 27 | 63 | 134 | 128 | ++++ | ++++ |
| B2 | 12 | ABC | 1,8 | 8,4 | 1,8 | 30 | 2 | 30 | 67 | 138 | 130 | ++++ | ++++ |
| | | | | | | | | Seite B | | Seite B | | | |
| VB1 | 12 | AB | 2 | 10 | | 40 | 0,6 | 70 | | 130 | | ++ | + |

Zeichenerklärung beim Wickel- und beim Verarbeitungsverhalten der Folien:

++++   keine Klebeneigung an Walzen oder anderen mechanischen Teilen, keine Blockprobleme beim Wickeln und bei der Verarbeitung auf Verpackungsmaschinen, niedrige Herstellkosten

+       mittlere Herstellkosten

–       Klebeneigung an Walzen oder anderen mechanischen Teilen, Blockprobleme beim Wickeln und bei der Verarbeitung auf Verpackungsmaschinen, hohe Herstellkosten durch aufwändiges Handling der Folie in den Maschinen

**Patentansprüche**

1. Biaxial orientierte Polyesterfolie mit einer Basisschicht B und darauf aufgebrachten Deckschichten A und C, wobei die Deckschichten A und C Polyester mit Ethylenterephthalat- und/oder Ethylenisophthalat-Einheiten und Poly(m-xylol-adipinamid) enthalten und wobei mindestens eine der Deckschichten mindestens ein Antiblockmittel enthält.

2. Polyesterfolie nach Anspruch 1, **dadurch gekennzeichnet, dass** die Basisschicht B zu mindestens 80 Gew.-% aus thermoplastischem Polyester besteht.

3. Polyesterfolie nach Anspruch 1 oder 2, **dadurch gekennzeichnet, dass** die Deckschichten A und C Ethylenterephthalat- und/oder Ethylenisophthalat-Einheiten zu 54 bis 90 Gew.-% aufweisen.

4. Polyesterfolie nach einem oder mehreren der Ansprüche 1 bis 3, **dadurch gekennzeichnet, dass** die Deckschichten A und C Poly(m-xylol-adipinamid) zu 10 bis 45 Gew.-% aufweisen.

5. Polyesterfolie nach einem oder mehreren der Ansprüche 1 bis 4, **dadurch gekennzeichnet, dass** zumindest eine der Deckschichten A und C mindestens ein Antiblockmittel enthält, das durch folgende Parameter **gekennzeichnet** ist

   a) der mittlere Partikeldurchmesser beträgt 2 bis 5 $\mu$m,
   b) die Streuung der Partikelgrößenverteilung, SPAN 98, beträgt 1,2 bis 2,0, und
   c) die Konzentration beträgt 0,1 bis 1 Gew.-%.

6. Polyesterfolie nach einem oder mehreren der Ansprüche 1 bis 5, **dadurch gekennzeichnet, dass** der thermoplastische Polyester der Basisschicht B Ethylenglykol-und Terephthalsäure-Einheiten oder Ethylenglykol- und Naphthalin-2,6-dicarbonsäure-Einheiten aufweist.

7. Polyesterfolie nach einem oder mehreren der Ansprüche 1 bis 6, **dadurch gekennzeichnet, dass** als thermoplastischer Polyester der Basisschicht B Polyethylenterephthalat verwendet wird.

8. Polyesterfolie nach einem oder mehreren der Ansprüche 1 bis 7, **dadurch gekennzeichnet, dass** als Polyester für die Deckschichten A und C ein Polyestercopolymer auf Basis von Terephthalsäure und Isophthalsäure verwendet wird.

9. Polyesterfolie nach einem oder mehreren der Ansprüche 1 bis 8, **dadurch gekennzeichnet, dass** als Polyester für die Deckschichten A und C ein Copolyester verwendet wird, der aus Terephthalat-, Isophthalat- und Ethylenglykol-Einheiten besteht.

10. Polyesterfolie nach einem oder mehreren der Ansprüche 1 bis 9, **dadurch gekennzeichnet, dass** die Folie eine Sauerstoffdurchlässigkeit (OTR) von weniger als 60 cm$^3$/m$^2$ ·bar ·d aufweist.

11. Polyesterfolie nach einem oder mehreren der Ansprüche 1 bis 10, **dadurch gekennzeichnet, dass** die Folie eine Haftung zwischen den Schichten A und B von größer/gleich 1 N/15 mm aufweist.

12. Polyesterfolie nach einem oder mehreren der Ansprüche 1 bis 11, **dadurch gekennzeichnet, dass** die Rauigkeit der das Antiblockmittel enthaltenden Deckschicht größer als 40 nm ist.

13. Polyesterfolie nach einem oder mehreren der Ansprüche 1 bis 12, **dadurch gekennzeichnet, dass** der Glanz der antiblockmittelfreien Deckschicht größer als 120 ist.

14. Verfahren zur Herstellung einer Polyesterfolie nach einem oder mehreren der Ansprüche 1 bis 13, umfassend die Schritte

   a) Herstellen einer Folie durch Koextrusion,
   b) biaxiales Strecken der Folie und
   c) Thermofixieren der gestreckten Folie.

15. Verwendung einer Polyesterfolie nach einem oder mehreren der Ansprüche 1 bis 13 als Verpackungsmaterial für

Nahrungs- und Genussmittel.

Figur 1

Figur 2

**Europäisches Patentamt**

**EUROPÄISCHER RECHERCHENBERICHT**

Nummer der Anmeldung

EP 06 01 1737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 1 700 878 A (MITSUBISHI POLYESTER FILM GMBH) 13. September 2006 (2006-09-13) * Absätze [0022] - [0029]; Ansprüche 1,5,6 * ----- | 1 | INV. B32B27/34 |
| A | EP 1 440 793 A (MITSUBISHI POLYESTER FILM GMBH) 28. Juli 2004 (2004-07-28) * Ansprüche 1,3,10 * ----- | 1 | |

RECHERCHIERTE SACHGEBIETE (IPC)

B32B

Der vorliegende Recherchenbericht wurde für alle Patentansprüche erstellt

| Recherchenort | Abschlußdatum der Recherche | Prüfer |
|---|---|---|
| München | 6. Oktober 2006 | Von Kuzenko, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 1737

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2006

| Im Recherchenbericht angeführtes Patentdokument | | Datum der Veröffentlichung | Mitglied(er) der Patentfamilie | | Datum der Veröffentlichung |
|---|---|---|---|---|---|
| EP 1700878 | A | 13-09-2006 | DE | 102005011469 A1 | 14-09-2006 |
| | | | US | 2006204747 A1 | 14-09-2006 |
| EP 1440793 | A | 28-07-2004 | DE | 10302033 A1 | 29-07-2004 |
| | | | JP | 2004224048 A | 12-08-2004 |
| | | | US | 2004146725 A1 | 29-07-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1440793 A

- EP 1457316 A